# EUROPEAN PATENT APPLICATION

(11) **EP 3 276 578 A1**
(43) Date of publication of application: **31.01.2018**
(21) Application number: 16769157.5
(22) Date of filing: 25.02.2016
(51) Int. Cl.: G06T 15/04, G06T 7/00, G06K 9/66

(54) **METHOD FOR DEPICTING AN OBJECT**

(30) Priority: 25.03.2015 RU 2015111132
(71) Applicant: Limited Liability Company "laboratory 24", Tula 300041 (RU)
(72) Inventor: AVERYANOV, Vitaly Vitalyevich, Tula 300005 (RU); KOMISSAROV, Andrey Valeryevich, Tula 300024 (RU)
(74) Representative: Schmidt, Steffen J.
(86) International application number: PCT/RU2016/000104
(87) International publication number: WO 2016/153388

(57) **Abstract**

The invention relates to technologies for processing and generating image data and for visualizing a three-dimensional (3D) image. The technical result makes it possible to depict the actual texture of a photo image or video image of an object on a visible image. According to the claimed method, a 3D model is generated, photo images or video images of an object are produced, a 3D model is visualized, the 3D model together with a reference pattern and also coordinates of texturing portions corresponding to polygons of the 3D model are stored in the memory of a depiction device, at least one frame of the photo image or video image of the object is produced, the object in the frame is identified on the basis of the reference pattern, if more than one frame is present a choice is made from the frames from the point of view of image quality, a matrix of conversion of photo image coordinates into dedicated coordinates is generated, elements of the 3D model are coloured in the colours of the corresponding elements of the photo image by generating a texture of the image sensing area using the coordinate conversion matrix and data interpolation, with subsequent designation of the texture of the 3D model.

## Description

The invention relates to the processing and generation of image data, the analysis of an image and its texture, rendering of a 3D (three-dimensional) image, including its texture displaying.

The closest as to the technical essence is the way to generate a texture in real time scale, including the following steps: obtaining the position of the observer; calculating the field of view; determining the required resolution for visualization; obtaining a map of the location of the thematic objects; obtaining the parameters of a thematic object; formation of a thematic object mask; receipt of photographic data from a thematic object; preparation of a thematic texture of the thematic object; texturizing of a thematic object by.mask; placing a textured thematic object on a texture map; obtaining a map of the location of images of 3D objects; obtaining 3D object parameters; determining the type of objects; forming a 3D object model; obtaining a texture of 3D object; texturizing a 3D object; rendering a 3D object; forming a mask of images of a 3D object; formation of a dot-element image or mnemonic image of a 3D object; formation of a dot-element image or mnemonic image mask of a 3D object; placing a 3D object image on a texture map, and visualization (see RU 2295772 C1, cl. G06T 11/60).

The known method can be implemented for visualization of topographic images of the terrain and uses data of the parameters of thematic objects to compose the texture of their images.

The disadvantage of the known method is a limited set of conditional textures defined in advance for each particular object. The known method does not provide transmission of the actual picture of the surface of the object of the output image.

The technical result obtained herein is providing the ability to display an output image having the actual texture of the photo or video image , simplifying the implementation by eliminating the need to store a database of reference textures of objects, enabling texturising of a 3D model areas invisible on the 2D object.

The indicated result is achieved by the method of displaying the object according to option 1, comprising: forming a 3D model, obtaining a photo or video image of an object, visualizing the 3D model, storing the 3D model in the memory of a displaying device along with a reference image and coordinates of texturized sections corresponding to the polygons of the 3D model; receiving at least one image or image video frame of the object based on the reference image, recognizing the object on the frame based upon the reference image, if there are more than one frame, the selection is made based upon image quality, forming a conversion matrix adapted to convert the coordinates of the photo image into its own coordinates, painting elements of the 3D model into colors of the corresponding photo elements by forming a texture of an area of the image that is being scanned, further using a coordinate transformation matrix and interpolating the data followed by setting the texture of the 3D model such that the corresponding polygons are covered by the corresponding texture regions according to coordinates determined at the texturizing stage, at least some parts of the 3D model that are not present on the photo image of the object are textured in accordance with a predetermined order, wherein the object is two-dimensional or perceived as a two-dimensional image, and the 3D model is formed with respect to at least a part of this two-dimensional image, the 3D model is visualized over a video stream using augmented reality tools and / or computer vision algorithms.

In addition: - forming the 3D model represented by polygons;
- forming coordinates transformation matrix to transform photo image coordinates into its own, namely Decart coordinates, characterized by the orthogonality of the axes;
- wherein sections of the 3D model that are absent on the image of the object are parts of the reverse side of the image details;
- wherein texturizing the 3D model in accordance with a predetermined order comprises generation of texture coordinates such that areas of the reverse side of the model have the same coordinates on the texture as the corresponding sections of the front side;
- wherein sections of the three-dimensional model that are absent on the image of the object are textured on the basis of extrapolation of the data of the image visible parts;
- wherein the 3D model is animated;
- wherein the object perceived as a two-dimensional image is a graphic image executed on a bent plane.

The technical result is providing an ability to display the actual texture of the photo or video image of the object on the output image, providing the training ability in drawing programs for children, simplifying implementation by eliminating the need to store reference textures database of objects, enabling texturizing of 3D models invisible on the 2D object, and also simplifying the use of texturizing process by providing an possibility for an untrained user to apply the usual techniques for painting 3D models.

Said result is achieved by displaying the object in accordance with an option 2, comprising forming a 3D model, obtaining a photo or video image of the object, saving in a memory of the displaying device the 3D model along with the reference image and the coordinates of the sections of texturizing corresponding to the ranges of the 3D model, obtaining at least one image or video image frame of the object, the object is recognized on the frame based upon reference image, in case there is more than one frame, a selection is made based upon image quality, forming coordinates transformation matrix adapted to be used for conversion of photo image coordinates into own coordinates of the image, painting elements of the 3D model into the colors of the corresponding photo elements by determining the colors of the 3D model materials based on the color scanning at predetermined photographic image points using the coordinate transformation matrix, and then assigning colors to the corresponding 3D model materials, at least some of the 3D model portions missing from the photo image of the object are textured in accordance with a predetermined order. The object is two-dimensional or perceived as a two-dimensional image, and the 3D model is formed with respect to at least a portion of this two-dimensional image, the 3D model is rendered over the sequence of video frames using augmented reality tools and / or computer vision algorithms.

In addition: - forming a 3D model represented by polygons;
- forming transformation matrix for transforming coordinates of the photo-image into its own, namely the Decart coordinates, characterized by the orthogonality of the axes;
- wherein sections of the 3D model that are absent on the image of the object are parts of the reverse side of the image details;
- wherein texturizing the 3D model in accordance with a predetermined order means generation of texture coordinates in such a way that the areas of the reverse side of the model have the same coordinates on the texture as the corresponding sections of the front side;
- wherein sections of the three-dimensional model that are absent on the image of the object being texturised on the basis of extrapolation of the data of the visible parts of the image;
- wherein 3D model is animated;
- wherein the object perceived as a two-dimensional image is a graphic image executed on a bent plane.

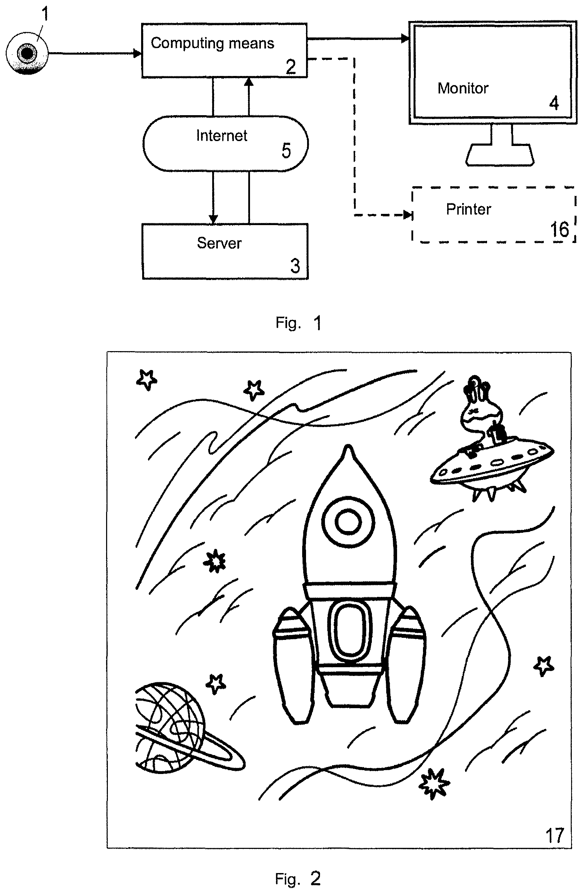

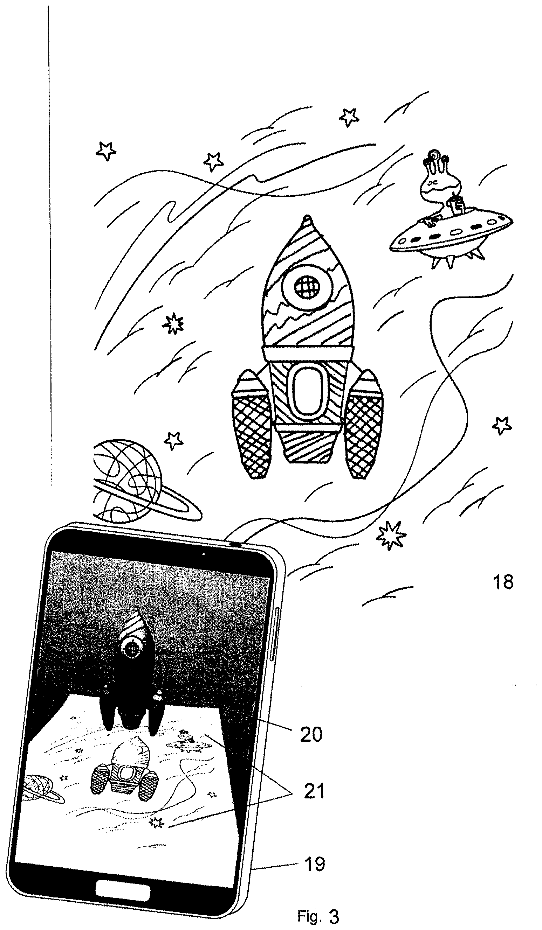

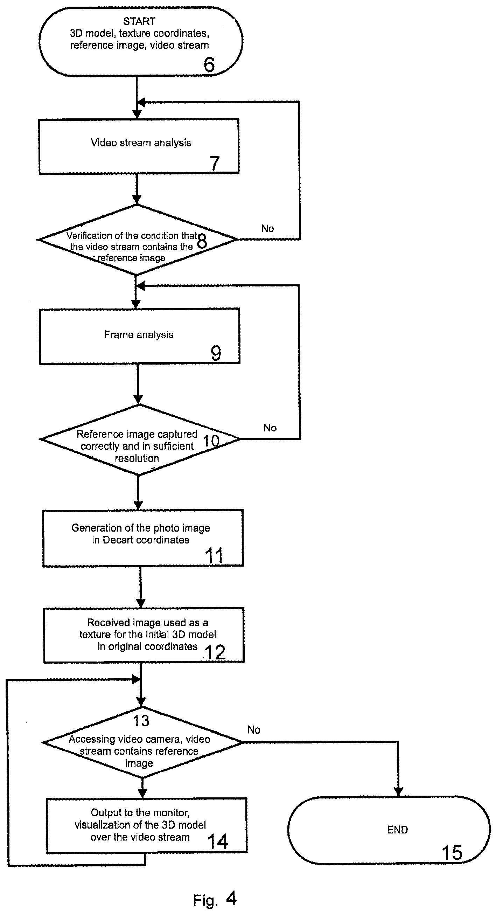

Fig. 1 depicts a block diagram of a PC-based display device and a remote server for storing a reference image and a 3D model described in Example 2. Fig. 2 shows an image of the original object - a two-dimensional graphic image before its coloring, corresponding to the reference image of the object, in Fig. 3 - the painted original graphic image and the 3D model rendered on the screen of the display device, visualized on the screen of the picture, Fig. 4 is a block diagram of the computing aids of a display device.

The following references are used in the drawings: 1 - video camera or camera, 2 - computer aids, 3 - server, 4 - monitor, 5 - Internet, 6 - input of initial data: 3D model, texture coordinates, reference image, video stream , 7 - video stream analysis, 8 - verification of the condition that the video stream contains the reference image, 9 - frame analysis, 10 - verification of the framing condition, 11 - generation of the photo image taking into account the coordinate transformation matrix, 12 - texture scanning in the assigned sections - texturizing sections , 13 - access to the video camera, checking the condition of recognition of the object on the video image, 14 - output to the monitor, visualization of the 3D model over the video, 15 - the end of the program, 16 - the printer, 17 - the original object - a two-dimensional graphic image, 18 - the user-drawn two-dimensional graphic image, 19 - the display device (smartphone), 20 - visualized on the monitor display device 3D model, 21 - visualized 3D model background components.

The method of displaying the object, comprising a two-dimensional image in accordance to option 1, comprises sequentially performing the following actions: forming and storing in the memory of the display device a reference image of the object with texturized areas and represented by 3D model polygons, wherein said polygon's coordinates correspond to the coordinates of the texturized areas, receiving at least one image frame or video image of an object, recognizing an object on the photo image based upon a reference image, selecting a frame satisfying image quality requirements such as clarity, detail, signal-to-noise ratio, etc., forming a coordinate transformation matrix for converting the coordinates of the photo image into its own coordinates, whose systems are oriented orthogonally to the axes, painting the 3D model elements in the colors of the corresponding photo elements by forming the image texture of the image scanning area using the coordinate transformation matrix and data interpolation, followed by replaqing the 3D model structure with the acquired image of the scanning area, such that the corresponding polygons are covered by the respective texture regions in accordance with the coordinates pre-formed at the texturizing stage. Then render a 3D model visualization. At the same time, at least some portions of the 3D model, for example, portions of the back side of the pattern, are painted in accordance with a predetermined order, and forming the 3D model with respect to at least a portion of this two-dimensional image, for example, with respect to the most significant of the aggregated plurality of images.

After recognition, the selection of the most informative from the viewpoint of scanning the data among the captured frames is performed. Such frames can be frames with the most clear image, with the greatest detail, etc. Visualization of 3D model is carried out over the video (video stream) using the augmented reality and / or computer vision algorithms.

Painting the 3D model in accordance with a predetermined order comprises generation of texture coordinates in such a way that the areas of the back side of the model have the same coordinates on the texture as the corresponding sections of the front side, or the coloring of the sections of the back side of the model are performed on the basis of extrapolation of the data of the visible parts of the image.

The 3D model is animated.

The method of displaying the object in accordance with option 1 works as follows. The objects for displaying are graphic two-dimensional objects - drawings, graphs, schemes, maps, etc. The method assumes the process of recognizing on a photo image of a graphic object by computing means of a display device equipped with a video or camera or other scanning device and a monitor. Such devices can be a mobile phone, a smartphone, a tablet, a personal computer, etc.

A circle of two-dimensional objects, i.e. markers, created beforehand and juxtapose with a plot-related 3D models (3D models) represented by polygons, as well as reference images. Every two-dimensional image is associated with one reference image and one 3D model, stored in the memory of the display device. Reference images are used for recognition of an object and the formation of the coordinates transformation matrix. After being painted 3D models are visualized over a certain background, which can be a video stream formed at the output of a video camera or a photo image, received after photographing the object, or other background.

The formation of a 3D model involves the process of generating texture coordinates.

Recognition is performed by comparing the photo image of the object with its reference image, also stored in the memory of the display device, and considering the image recognized when the threshold value of the correlation coefficient of the photo-image and one of the reference images is exceeded or using other known recognition algorithms.

Object shooting can be carried out in at a certain range of angles and distances, so after recognizing the object on the photo image, a correlation matrix of the coordinates of the photo image and the own-coordinates, characterized by the orthogonality of the axes, i.e. the matrix of the coordinate transformation, is formed.

The coordinates of the sections being texturized, juxtaposed to the corresponding 3D model polygons are stored in the memory of the device displaying the object.

After recognizing the object the textures of the image scanning area are formed based on the values of the coordinate transformation matrix and the data interpolation. Then, the 3D texture pattern is assigned to the acquired image of the scanned area, so that the corresponding ranges are covered by the corresponding texture regions according to the coordinates previously formed at the texturizing stage.

Texturizing of a 3D model assumes assigning a texture to one or more 3D model materials. A material of the 3D model comprising a recognized in accordance with generally accepted conventions aggregation of information related to the way of displaying fragments of the model to which it is assigned, and may include texture, color, etc.

The process of texturizing the 3D model also involves transferring the color to parts of the 3D model that can not be visible on a 2D graphic image, for example, such "invisible" parts can be the back side of an image element, its side view, top or bottom. The transfer of colors of such "invisible" parts to the polygons of the 3D model is carried out, for example, on the basis of the symmetrical structuring of the 3D model on both sides, or painting the "invisible" areas in a darker tone, or on the basis of other algorithms, including using extrapolation methods.

After the 3D model texturizing, i.e after creating the coordinates of its texture, the 3D model immediately or on the user's command is displayed on the monitor screen of the display device.

The output image comprises a video image where a model, including an animated one, is drawn over the background that is for example a video (video stream) received from the video camera, so that an illusion of its actual presence is created.

Thus, the method of displaying the object allows the user to apply a texture scanned from the real space by means of a photo or video camera to a virtual object. In the process of visualization, the user is given the opportunity to control the model in space, i.e. rotate, shift, zoom, etc., including by moving the input devices of the display device or by using gestures in the focus of the video camera.

The computational means of the display device are made on the basis of the processor and contain a memory for storing the program of operation of the processor and the necessary data, including reference images and 3D models.

The method of displaying the object, which is a two-dimensional image according to the option 2, comprises sequentially performing the following actions: forming and storing in the memory of the device the reference image of the object with the areas being texturizing and 3D model represented by polygons, wherein coordinates of said polygons correspond to the coordinates of the areas being texturized, receiving, at least one image frame or video image of an object, recognizing of an object on said photo image based upon the reference image, selecting a frame satisfying image quality requirements such as clarity, detail, signal-to-noise ratio, etc., forming a matrix for converting the coordinates of the photo image into its own coordinates, wherein the axes are orthogonal, painting the 3D model elements in the colors of the corresponding photo elements by determining the colors of the color materials of the 3D model based upon the color scanning, at predetermined photographic image points using a coordinate transformation matrix, and then assigning colors to the corresponding 3D model materials. Then implementing a 3D model visualization.

At the same time, at least some portions of the 3D model, for example, portions of the back side of the pattern, are painted in accordance with the predetermined order, and the 3D model is formed with respect to at least a portion of this two-dimensional image, for example, with respect to the most significant of the aggregated plurality of images.

After recognition, the most informative frame from the viewpoint of scanning among the captured frames is selected. Such frames can be frames with the most clear image, with the greatest detail, etc.

Visualization of 3D models is carried out over the video (video stream) using the augmented reality and / or computer vision algorithms.

Painting of the 3D model in accordance with a predetermined order is implemented as generation of texture coordinates in such a way that the areas of the back side of the model have the same coordinates on the texture as the corresponding sections of the front side or the coloring of the sections of the back side of the model are performed on the basis of extrapolation of the data of the visible image parts. The 3D model implemented as animated.

The method of displaying the object according to the option 2 works as follows. The objects for displaying are graphic two-dimensional objects - drawings, graphs, schemes, maps, etc. The method assumes the process of recognizing of a graphic object on a photo image by computing means of a display device equipped with a video or camera or other scanning device and a monitor. Such devices can be a mobile phone, a smartphone, a tablet, a personal computer, etc.

A circle of objects in the form of two-dimensional images, i.e. markers, is created beforehand and juxtaposed to corresponding three-dimensional models (3D models) represented by polygons and reference images. Each two-dimensional image is associated with one reference image and one 3D model, stored in the memory of the display device. Reference images are used for recognizing an object and forming a coordinate transformation matrix. 3D models after painting are visualized over a certain background, which can be a video stream formed at the camera's output, or a photo image obtained after photographing an object, or a different background.

Formation of a 3D model involves the process of generating texture coordinates. Recognition is performed by comparing the photo image of the object with its reference image, also stored in the memory of the display device, wherein the photo image shall be considered to be recognized when the threshold value of the photo image correlation coefficient of photo and one of the reference images is exceeded, or other known recognition algorithms are used.

Object shooting can be carried out at a certain range of angles and distances, thus after recognizing the object on the photo image, a matrix of the ratio of the coordinates of the photo image and the own coordinates, characterized by the orthogonality of the axes, i.e. the matrix of the coordinate transformation, is formed.

In the memory of the display device for this object, the coordinates of the texturizing sections are stored, to which the corresponding 3D model ranges are mapped.

After recognizing the object, the textures of the image scanning area are formed based on the values of the coordinate transformation matrix and data interpolation. After that, the color of certain areas is recognized on the photo image and due to a rigid connection between these sections and the 3D model ranges, the structure of the 3D model's surface color becomes appropriate to the color of the sensed object, so the materials directly assigned to the sections of the model without using of textures are directly painted.

3D model texturizing involves assigning a texture to one or more 3D model materials. A material of the 3D model comprising a recognized in accordance with generally accepted conventions aggregation of information related to the way of displaying fragments of the model to which it is assigned, and may include texture, color, etc.

The process of the 3D model texturizing involves transferring the color also to the parts of 3D models that can not be visible on a 2D graphic image, for example, such "invisible" parts can be the back side of an image element, its side view, top or bottom. Transfer of colors of coloring of such "invisible" parts to ranges of the 3D model is carried out, for example, on the basis of symmetrical structuring of the 3D model from both sides, or coloring of "invisible" areas in a darker tone or on the basis of other algorithms, including using extrapolation methods.

After texturizing the 3D model, that is, after creating the coordinates of its texture, the 3D model immediately or on the user's command is displayed on the monitor screen of the display device.

The output image is a video image on which a model, including an animated one, is drawn over the background, for example a video (video stream) received from the video camera, so that an illusion of its actual presence is created.

Thus, the method of displaying an object allows the user to apply a texture sensed from a real space by means of a photo or video camera to a virtual object.

In the process of visualization, the user is given the opportunity to control the model in space, i.e. rotate, shift, zoom, etc., including by moving the input devices of the display device or by using gestures in the focus of the video camera.

The computational means of the display device for implementing the method according to any one of the options 1 or 2 are processor-based and contain a memory for storing the processor operation program and necessary data, including reference images and 3D models.

The block diagram of the processor operation program is shown in Fig. 4 and includes the following main elements. The initial data 6 for the program, stored in the memory comprise the previously formed 3D model, the texture coordinates, the reference image of the object, and the video stream formed at the output of the video camera. The term "video stream" is used here as identical to the term "video series". The program analyzes the video stream in order to select a frame or frames that meet the requirements of the required image clarity, framing, exposure, focus, etc. The frames are sorted and analyzed until a frame meeting the specified requirements is found, and the analysis is done sequentially in two stages. First, 7, 8 from the video sequence, select frames containing the object to be displayed, on which this object is recognized, and then 9, 10 from the selected frame group select frames that meet the requirements for accuracy and framing.

Next, the coordinate transformation matrix 11 is formed and the coordinates of the photo image frame are applied to the Decart coordinates of the strictly frontal view of the object. The texture coordinates in the designated texturizing areas are scanned. Materials are assigned 12 to the 3D model texture coordinates. The video stream from the camera's output is analyzed for presence of an object in the frame and if so, the model is visualized over the video stream (video sequence) obtained from the camera output.

As soon as the object ceases to be recognized on video frames, the program is terminated.

Alternatively, instead of terminating the program the following actions can be performed: returning to the beginning of the program, or transferring the device to a brief waiting mode to wait for the fact of recognition, or notifying the user about loss of capture of the object image, or other action.

### Example 1.

The objects comprise drawings from the developing set of children's contour coloring pictures, which are simple drawings (Figure 2), comprising contour lines drawn on standard sheets of rectangular shape, having drawing elements for coloring. Each drawing includes one or more main elements located, as a rule, in the central part of the sheet, and minor background elements located on the periphery.

Each of the drawings is associated with the pre-created reference image, the coordinates of the color detection areas of the object and the animated 3D model with the selected ranges corresponds to these areas by polygons. 3D model reflects the volumetric vision of the main elements of the drawing, tied to the coordinates of these elements in the image.

The display device is a smartphone equipped with a video camera, computational means with the corresponding software, monitor, etc.

After the contour drawing is colored by the user, the smartphone is placed such that the whole picture fits in the frame, and take a picture of it, or videotape the picture. The smartphone recognizes the image directly on the selected frame using computational means, that is it finds a pre-created 3D model corresponding to the image and selects the most informative frame, if several were made, and also forms the matrix of the coordinates of the image elements on the photo image to its own coordinates in the Decart system. As a result, the coordinates of the color recognition areas of the painted drawing come matched with the coordinates of the corresponding sections on the photo image.

The color of the painted areas is scanned on the photo image and after the necessary analysis, matching and color correction transfer the coloring of the sections to the corresponding 3D model polygons, that is, the obtained colors being assigned directly to the model materials.

The next step is visualization of the 3D model (Figure 3), displayed over the background, formed by the secondary elements of the picture on the photo image or the video sequence obtained by capturing means of the smartphone. The 3D model can be made movable and have additional elements not shown in the figure.

The rendered 3D model is interactive, capable of responding to user actions.

### Example 2.

The display device comprises a personal computer having connected webcam and monitor, and a remote server (FIG. 1). The monitor or display may be any visualization device, including a projector or a hologram forming device. Reference images of the objects and 3D models are stored on a remote service, which is accessed during the displaying of graphic two-dimensional objects.

Calculations in the process of recognition are carried out by means of a personal computer, with the help of which the materials of the 3D model are also colored and rendered.

The computer is connected to the server via the Internet or another network, including a local network.

The mapping process is performed as follows. The user accesses a corresponding website via the Internet, which contains thematic sets of drawings for printing and subsequent coloring. The website is supplied with an appropriate interface for accessing the reference images and storing these images and 3D models corresponding to the patterns from the sets.

The user prints a selected set of drawings on his side with the help of the printer and colors the drawings he likes. The user can also obtain already printed drawings in a different way, for example, via the newsletter. Further, being in the interface of the website, the user directs the webcam in such a way that the main part of the painted picture is included in the frame. The user's computer, executing the appropriate commands of the program accesses the remote server, from which it receives reference images of the drawings for recognition. After recognition of the pattern is completed, a coordinate transformation matrix is generated by means of the personal computer, said program providing for the color of the painted areas of the pattern to be sensed and color of the corresponding 3D model materials to be assigned.

The image of the textured 3D model is output to the monitor over the background of the video sequence obtained from the web camera output.
The method of displaying an object can be implemented using standard devices and components, including computer-based means based on a processor, a photo and / or video camera, a monitor or other visualization device, and also communication means between them.

Thus, the method of displaying the object according to any of the options 1 or 2 provides the ability to display on the output image the real texture of the photo or video image of the object, it provides training capabilities in drawing programs for children, simplifies the implementation by eliminating the need to store a base of any reference objects textures, provides capabilities to texturize areas of the 3D model that are invisible on the 2D object. It also simplifies the use of the texturizing process by providing capability for an untrained user to apply the usual techniques for painting 3D models.

## Claims

1. A method for displaying an object, comprising forming a 3D model, obtaining a photo or video image of an object, visualizing a 3D model, **characterized in that** the 3D model is stored in the memory of the display device along with the reference image and the coordinates of the texturising sections corresponding to the 3D model ranges are obtained, at least one image or video image frame of the object, on the basis of the reference image, the object is recognized on the frame, if there are more than one frame, they are selected in terms of image quality, form the matrix for converting the coordinates of the photo image into their own coordinates, into the colors of the corresponding picture elements by forming the texture of the image sensing area using a coordinate transformation matrix and interpolating the data, and then assigning the 3D model texture, so that the corresponding ranges are covered by the corresponding texture portions along pre-formed coordinates at the texturising stage, at least some portions of the 3D model that are not present on the photo image of the object are textured according to a predetermined order. An object is two-dimensional or perceived as a two-dimensional image, and the 3D model is formed with respect to at least a portion of this two-dimensional image, visualization of the 3D model is carried out over the video using the augmented reality and/or computer vision algorithms.

2. A method according to claim 1, **characterized in that** a 3D model represented by the ranges is formed.

3. The method according to claim 1, **characterized in that** a matrix for converting coordinates of the photo image into its own, namely Cartesian coordinates, is formed, **characterized by** the orthogonality of the axes.

4. The method according to claim 1, **characterized in that** parts of the reverse side of the image details are portions of the 3D model that are not present on the photo image of the object.

5. The method according to claim 1, wherein the texturising of the 3D model according to a predetermined order is the generation of texture coordinates such that the regions of the reverse side of the model have the same coordinates on the texture as the corresponding front-side portions.

6. The method according to claim 1, wherein the portions of the three-dimensional model that are absent from the image of the object are textured based on extrapolating the data of the visible parts of the image.

7. The method according to claim 1, wherein the 3D model is animated.

8. The method of claim 1, wherein the object, perceived as a two-dimensional image, is a graphic image made on a bent plane.

9. A method for displaying an object, comprising forming a 3D model, obtaining a photo or video image of an object, visualizing a 3D model, **characterized by** storing in the memory of the display device a 3D model together with a reference image and coordinates of the texturising sections, corresponding to the ranges of the 3D model, at least one image or video image frame of the object is obtained, on the basis of the reference image, the object is recognized on the frame. If there are more than one frame, they are selected in terms of image quality, form the matrix for converting the coordinates of the photo image into its own coordinates, color the elements of the 3D model into the colors of the corresponding photo elements by determining the colors of the 3D model materials based on the color sensed at predetermined photographic image points, using a coordinate transformation matrix and then assigning colors to the corresponding 3D model materials at least some portions of the 3D model, the objects absent on the image of the object are textured in accordance with a predetermined order, the object is two-dimensional or perceived as a two-dimensional image, and a 3D model is formed with respect to at least part of this two-dimensional image, the 3D model is visualized over the video using augmented reality means and / or computer vision algorithms.

10. The method according to claim 9, wherein a 3D model represented by the ranges is formed.

11. The method according to claim 9, **characterized in that** a matrix for converting the coordinates of the photo image into its own, namely Cartesian coordinates, is formed, **characterized by** the orthogonality of the axes.

12. The method according to claim 9, **characterized in that** parts of the reverse side of the image details are portions of the 3D model that are not present on the object's photo image.

13. The method according to claim 9, wherein the texturising of the 3D model in accordance with a predetermined order is the generation of texture coordinates such that the regions of the reverse side of the model have the same coordinates on the texture as the corresponding front-side portions.

14. The method according to claim 9, wherein the portions of the three-dimensional model that are not present on the object's photo image are textured based on data extrapolation of visible parts of the image.

15. The method according to claim 9, wherein the 3D model is animated.

16. The method of claim 9, wherein the object perceived as a two-dimensional image is a graphic image made on a bent plane.
